(19) Europäisches Patentamt
European Patent Office
Office européen des brevets

(11) **EP 4 328 543 B1**

(12) **EUROPÄISCHE PATENTSCHRIFT**

(45) Veröffentlichungstag und Bekanntmachung des Hinweises auf die Patenterteilung:
**23.10.2024   Patentblatt 2024/43**

(21) Anmeldenummer: **22191729.7**

(22) Anmeldetag: **23.08.2022**

(51) Internationale Patentklassifikation (IPC):
**G01B 11/30** (2006.01)   **G01B 11/28** (2006.01)
G01B 9/0209 (2022.01)   G01B 11/24 (2006.01)
B24C 1/10 (2006.01)

(52) Gemeinsame Patentklassifikation (CPC):
**G01B 11/303; G01B 11/285;** B24C 1/10;
G01B 9/0209; G01B 11/24

(54) **VERFAHREN ZUR BEURTEILUNG DES ERGEBNISSES EINER AN EINEM WERKSTÜCK DURCH PARTIKELSTRAHLEN DURCHGEFÜHRTEN OBERFLÄCHENBEHANDLUNG**

METHOD FOR EVALUATING THE RESULT OF A SURFACE TREATMENT PERFORMED ON A WORKPIECE BY PARTICLE JETS

PROCÉDÉ D'ÉVALUATION DU RÉSULTAT D'UN TRAITEMENT DE SURFACE EFFECTUÉ SUR UNE PIÈCE PAR JETS DE PARTICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.02.2024   Patentblatt 2024/09**

(73) Patentinhaber: **3D.aero GmbH**
**20539 Hamburg (DE)**

(72) Erfinder:
• **Janssen, Anton**
**22457 Hamburg (DE)**
• **Reimer, Lars**
**22089 Hamburg (DE)**
• **Flüh, Tobias**
**24407 Rabenkirchen-Faulück (DE)**
• **Domaschke, Tomas**
**22043 Hamburg (DE)**
• **Ernst, Michael**
**23867 Sülfeld (DE)**

(74) Vertreter: **Raffay & Fleck**
**Patentanwälte**
**Grosse Bleichen 8**
**20354 Hamburg (DE)**

(56) Entgegenhaltungen:
DE-A1- 102010 001 286    JP-A- 2004 142 007
JP-A- 2010 017 807    US-A- 5 235 517

**Beschreibung**

Die vorliegende Erfindung betrifft Verfahren zur Beurteilung des Ergebnisses einer an einem Werkstück durch Partikelstrahlen durchgeführten Oberflächenbehandlung. Dies findet beispielsweise Anwendung in der Luftfahrt- und/oder Automobilindustrie. Insbesondere betrifft die Erfindung ein Verfahren zur automatischen Bedeckungsprüfung partikelgestrahlter, z.B. kugelgestrahlter, Oberflächen.

Insbesondere in der Luftfahrtindustrie herrschen hohe Anforderungen an die Zuverlässigkeit und Sicherheit von Bauteilen bei gleichzeitig geringem Gewicht. Aus diesem Grund wird z.B. ein hoher Anteil der rotierenden Triebwerksbauteile zur Erhöhung der Dauerfestigkeit partikelgestrahlt, insbesondere kugelgestrahlt. Hierbei wird die Oberfläche des Werkstücks mit Strahlgut, meist Kugeln aus Stahl, Keramik oder Glas, beschossen. Die Aufschläge des Strahlguts führen zu einer oberflächlichen Verformung, welche zur Bildung einer Druckeigenspannungslage an der Werkstückoberfläche führt. Diese Druckeigenspannungslage behindert die Bildung und das Wachstum von oberflächlichen Defekten. Die so erreichte Steigerung der Dauerfestigkeit hängt zu einem großen Teil vom Bedeckungsgrad der Oberfläche ab. Der Bedeckungsgrad bezeichnet den von Einschlagskalotten bedeckten Anteil der behandelten Oberfläche in Prozent. Dementsprechend kommt der Prüfung von partikelgestrahlten Oberflächen auf vollständige Bedeckung, in der Praxis heißt dies meist Bedeckungsgrade größer gleich 98%, eine besondere Bedeutung zu.

Die bisherigen etablierten Verfahren sind aufgrund ihrer geringen Genauigkeit, Flexibilität, Robustheit und mangelnden Wiederholbarkeit nicht zufriedenstellend.

Es gibt im Stand der Technik bereits verschiedene Ansätze, die Güte einer durchgeführten Partikelstrahlbehandlung von Werkstückoberflächen zu bestimmen. Eines der am weitesten verbreiteten Verfahren ist dabei nach wie vor die visuelle Prüfung mittels Lupe oder Taschenmikroskop. Übliche Vergrößerungen liegen im Bereich 10-fach bis 30-fach. Hierbei schätzt ein Werker den Bedeckungsgrad anhand seiner Erfahrung und im Vergleich zu Referenzproben ab.

Bei einem aus der US 3950642 A bekannten Verfahren wird vor dem Strahlen auf die zu bearbeitende Oberfläche eines Werkstücks eine fluoreszierende Farbe aufgetragen. An den direkt getroffenen Stellen platzt die Farbe ab. Nach erfolgtem Strahlen wird unter UV-Licht das Aussehen des Werkstückes mit vorbereiteten Proben bekannten Bedeckungsgrades verglichen und so ein Bedeckungsgrad bestimmt.

Die US 5293320 A gibt vor, durch linienweises taktiles Messen der Oberfläche eine Oberflächenkarte zu erstellen. In Höhenschnitten dieser Oberflächenkarte werden Konturen, etwa vergleichbar Höhenlinien auf Landkarten, gesucht und klassifiziert. Anhand der Anzahl und Art dieser Konturen wird der Bedeckungsgrad bestimmt.

Ein anderes Vorgehen schlägt die US 5235517 A vor. Demnach wird sowohl auf dem zu prüfenden Stück als auch einem Referenzstück jeweils eine Linie taktil vermessen. Hierbei werden die Wellenform und die Magnitude der Steigung bestimmt. Anschließend werden die Ergebnisse der beiden Stücke verglichen und daraus ein Bedeckungsgrad abgeleitet.

Bei einem in der US 5581483 A offenbarten Verfahren wird auf zwei idealerweise parallelen Linientracings der zu prüfenden Oberfläche eine Korrelationsanalyse durchgeführt. Hohe Korrelationswerte sind auf regelmäßige Oberflächengeometrien wie Drehriefen zurückzuführen. Geringe Korrelationswerte deuten auf zufällige Oberflächengeometrien hin, wie sie durch das Kugelstrahlen verursacht werden, zeigen also hohe Bedeckungsgrade auf.

Die DE 102010001286 A1 schlägt vor, mittels Weißlichtinterferometer oder Konfokalmikroskop eine 3D Oberflächenaufnahme anzufertigen und anschließend durch Subtraktion der ermittelten Bauteilform von einer bekannten Oberflächengeometrie des unbehandelten Werkstücks die durch das Strahlen bedingten lokalen Höhen zu bestimmen. Höhen, die unterhalb der Nulllinie liegen, werden als Einschläge identifiziert. Anhand deren Flächenanteils wird dann der Bedeckungsgrad bestimmt.

Bei einem in der FR 3100336 A1 vorgeschlagenen Vorgehen wird aus fotografischen Aufnahmen der gestrahlten Oberfläche unter verschiedenen Beleuchtungsrichtungen eine 3D-Tiefenkarte erstellt. Tief gelegene Bereiche, deren Variation größer gleich 10% der globalen Variation in der Aufnahme ist, werden als Einschlagskrater identifiziert.

Die JP 2010017807 A schlägt eine Bestimmung des Bedeckungsgrades über eine Analyse der Höhenverteilung der einzelnen Punkte vor, wobei nicht näher ausgeführt ist, mit welchem Messinstrument diese Bestimmung erfolgen soll. Die Gaußverteilungen der Höhen gestrahlter und ungestrahlter Oberflächen weisen nach dieser Schrift unterschiedliche Breiten und Mittelwerte auf; die gemessene Höhenverteilung wird in diese beiden Komponenten aufgeschlüsselt und anhand der Integrale unter den Verteilungen die Anteile an der Oberfläche bestimmt.

Bei einem Verfahren nach der JP 5511407 B2, bzw. der JP 2015160282 A werden zunächst Aufnahmen der Oberfläche mit einem telezentrischen Objektiv mit Abstandshalter angefertigt. Über einen Strahlteiler mit orthogonal zur Optikachse montierter LED wird eine koaxiale Beleuchtung realisiert. Die Identifikation der Einschläge erfolgt bei dem Verfahren nach der JP 5511407 B2 über einen einfachen Schwellwert der Helligkeit, die Flächenberechnung durch Pixelzählen. Bei dem Verfahren nach der JP 2015160282 A erfolgt die Bestimmung des Bedeckungsgrades über die durchschnittliche Luminanz (als arithmetisches Mittel aller Pixelhelligkeiten) und entsprechende Kalibrierungsfunktionen für die jeweils zu strahlende Oberfläche.

Bei einem Vorgehen nach der WO 2018185234 A1 wird die Korrelation von Bedeckungsgrad zu einem Parameter L* im CIELAB Farbraum ausgenutzt. Anhand von Proben unterschiedlichen Bedeckungsgrades wird eine entsprechende Korrelationsfunktion erstellt. Diese Schrift gibt dabei genauen Angaben zur Erstellung der für die Durchführung des Verfahrens benötigten Aufnahmen.

In einem Verfahren nach er WO 2019159424 A1 erfolgt eine Skalierung eines mittels einer Kamera gewonnenen Bildes auf eine standardisierte Größe, dies sowohl hinsichtlich der Auflösung als auch der durchschnittlichen Durchmesser der Einschläge. Anschließend kann bei Bedarf eine Farbkorrektur, Filterung und Schärfung vorgenommen werden. Die Auswertung erfolgt mittels eines neuronalen Netzwerks. Die Klassifizierung der Bedeckung erfolgt in Kategorien von 0% bis 98% Prozent.

Die DE 102020108956 A1 schlägt eine Erfassung von mindestens einer Einschlagsgeometrie vor, um mindestens einen Qualitätsparameter zu berechnen. Anhand dessen soll der Strahlprozess geregelt werden. Das Ermittlungssystem wird als ein optisches beschrieben, vorzugsweise nach dem Prinzip der Weißlichtinterferometrie. Das Ermittlungssystem soll dabei unter möglicher Zuhilfenahme eines Digitalrechners mit der Strahlanlagenregelung kommunizieren können. Nähere Angaben zu Aufbau, Algorithmik oder Verfahrensweise werden nicht gemacht.

Den bekannten Verfahren haften dabei folgende Nachteile an:

Manuelle Prüfverfahren für die Bedeckungsprüfung mittels z.B. Lupe/Taschenmikroskop, aber auch mit Fluoreszenzfarbe, sind in ihrer Genauigkeit abhängig von individuellen Faktoren wie Erfahrung, Tagesform und Aufmerksamkeit des Werkers. Eine genaue und wiederholbare Messung ist nicht möglich. Weiterhin ist eine Dokumentation der Oberfläche und des Prüfvorgangs selbst nicht zufriedenstellend möglich. Die Verwendung von Fluoreszenzfarbe hinterlässt zudem Rückstände auf der Oberfläche.

Bisherige Verfahren zur automatisierten Prüfung bedienen sich meist taktiler linienweiser Messungen oder fotografischer Aufnahmen der Oberfläche. Die taktile Messung der Oberfläche ist dabei zeitaufwendig und erfolgt üblicherweise auf Messmaschinen mit beschränktem Messraum und unflexibler Positionierung der Tastspitze. Eine Prüfung großer oder irregulär geformter Teile wird so erschwert oder ist nicht möglich. Weiterhin ist durch den Radius der Messspitze eine fehlerfreie Abtastung der sehr unregelmäßigen gestrahlten Oberfläche meist nicht möglich.

Fotografische Aufnahmen benötigen meist eine strikte und aufwendige Kontrolle der Beleuchtungsbedingen. Abweichungen von diesen Bedingungen sowie Unregelmäßigkeiten und Verschmutzungen auf den zu prüfenden Bauteilen führen zu unzuverlässigen Ergebnissen.

Den bekannten automatischen Verfahren ist dabei in der Regel gemein, dass sie direkt den bedeckten Anteil der Oberfläche bestimmen. Ausgehend von der in der Praxis üblichen Festlegung von 98% Bedeckungsgrad als "vollständig gestrahlt" führt ein Fehler in der Bestimmung der entsprechenden Fläche von 1 % zu einer Verfälschung des Messergebnisses um 0,98%.

Bekannte automatisierte Ansätze, insbesondere auch solche, die auf Machine-Learning basieren, haben in der Nähe vollständiger Bedeckung Probleme mit einer hinreichend feinen und genauen Klassifizierung, ihre Stärken liegen stattdessen im Bereich geringer Bedeckungsgrade.

Hier soll mit der Erfindung Abhilfe geschaffen werden.

Hierzu schlägt die Erfindung ein Verfahren mit den Merkmalen des Anspruchs 1 vor. Vorteilhafte Weiterbildungen werden in den abhängigen Ansprüchen 2 bis 4 aufgezeigt.

Demnach wird bei einem hier vorgeschlagenen Verfahren zur Beurteilung des Ergebnisses einer an einem Werkstück mittels Partikelstrahlens durchgeführten Oberflächenbehandlung, mittels eines optischen Messverfahrens die mittels Partikelstrahlens bearbeitete Oberfläche ortsaufgelöst aufgenommen. Dies geschieht idealerweise mit einer hohen Auflösung. Insbesondere sollte die Auflösung so gewählt werden, dass auf einen durchschnittlichen Einschlag mindestens zehn Bildpunkte in der Breite und/oder Länge entfallen, besser mindestens zwanzig. Für die in der Praxis verwendeten kleinsten Partikel würde das $7\mu m$ laterale Mindestauflösung bedeuten, für die größten Partikel 0,13mm. Die Höhenauflösung sollte idealerweise mindestens fünffach, insbesondere mindestens zehnfach, so gut wie die oben angegebene laterale Mindestauflösung, insbesondere die verwendete laterale Auflösung, sein. Insbesondere kann eine laterale Auflösung von $5\mu m$ oder besser und/oder eine Höhenauflösung von $< 1\mu m$ in eine oder zwei laterale Richtungen wendet werden. Aufgenommen wird ortsaufgelöst insbesondere die Höhe. Für die ortsaufgelöst aufgenommenen Messpunkte wird dann jeweils ein Oberflächenniveau sowie ein Wert einer lokalen Steigung gegenüber benachbarten Messpunkten ermittelt. Mit einem Oberflächenniveau ist eine räumliche Lage des Oberflächenpunktes in Relation zu einem Bezugspunkt gemeint, z.B. zu einem vordefinierten Ursprungspunkt oder zu einer Ursprungsebene in dem Werkstück selbst. Mithin gibt dann das Oberflächenniveau einen Wert für eine Höhenlage der Oberfläche an dem Ort des jeweiligen Messpunktes an.

Weiterhin wird erfindungsgemäß das erfasste Oberflächenniveau mit einem für das unbehandelte Werkstück an dem Messort des Messpunkts erwarteten Sollniveau verglichen, und es wird eine Abweichung ermittelt. Das erwartete Sollniveau kann dabei z.B. insbesondere aus einer Konstruktionsmodell des Werkstücks abgeleitet werden, aber auch aus einer Messung des Werkstücks vor der Behandlung mittels Partikelstrahlens.

In einem weiteren Schritt werden dann solche Messpunkte, für die sowohl das erfindungsgemäß erfasste Oberflächenniveau oberhalb eines um einen vorgegebenen Höhenschwellwert niedriger als das Sollniveau liegenden Niveaus liegt, als auch die erfasste Steigung einen vorgegebenen Steigungsschwellwert unterschreitet, als nicht von einem Partikel des Partikelstrahls getroffene Messpunkte identifiziert.

Durch Dividieren der Anzahl der als nicht von einem Partikel des Partikelstrahls getroffen identifizierten Messpunkte durch die Gesamtzahl der erfassten Messpunkte wird ein nicht von dem Partikelstrahl getroffener Anteil der Oberfläche bestimmt.

In dem erfindungsgemäßen Verfahren wird mithin, anders als in den bekannten Verfahren nach dem Stand der Technik nicht die von dem Partikelstrahl bedeckte Fläche erkannt und bestimmt, sondern die unbedeckte Fläche. So führt ein hier auftretender Fehler von 1% in der Flächenbestimmung bei einem mit angenommenen 98% Bedeckungsgrad, mithin 2% Nicht-Bedeckung als vollständig bestrahlt erkannten Werkstück nur zu einer Verfälschung des Messergebnisses um 0,02%.

Mit Vorteil kann als optisches Messverfahren Weißlichtinterferometrie genutzt werden. Dieses Messverfahren hat sich als besonders robust und störunanfällig erwiesen, insbesondere gegenüber möglichem Streulicht. Dabei kann es gleichwohl hochaufgelöste Aufnahmen der behandelten Oberfläche erstellen mit guter Orts- und auch Höhenauflösung.

Auch wenn die Aufnahmen der Oberfläche grundsätzlich mit einem freihandgeführten Messgerät durchgeführt werden können, hat es sich als besonders zweckmäßig herausgestellt, wenn das ortsaufgelöste Aufnehmen der mittels Partikelstrahlens bearbeiteten Oberfläche mittels eines optischen Messverfahrens mithilfe eines an einer automatisierten Verfahreinheit, insbesondere ein Roboter, Industrieroboter und/oder Cobot (Collaborativem Roboter), angeordneten optischen Messgerät durchgeführt wird.

Mit Vorteil wird das Verfahren für eine Mehrzahl von Abschnitten derselben Oberfläche durchgeführt, die insbesondere disjunkt sind. Dabei werden insbesondere die Abschnitte jeweils ortsaufgelöst aufgenommen, also insbesondere die Höhe in den Abschnitten ortsaufgelöst erfasst. Die Abschnitte sind insbesondere rechteckig oder quadratisch. Insbesondere sind die Abschnitte auf einer Fläche oder entlang einer Linie angeordnet. Insbesondere liegt die Anzahl der Abschnitte zwischen 10 und 500. Insbesondere weisen die Abschnitte jeweils eine Größe im Bereich von 10x10mm bis 100x100mm auf. Insbesondere weisen die Abschnitte untereinander jeweils einen Abstand im Bereich von 1mm bis 100mm auf und/oder überspannen sie eine Entfernung im Bereich von 5mm bis 300mm und/oder eine Fläche im Bereich von 10x10mm bis 50x100mm. Insbesondere sind die Abschnitte äquidistant und/oder regelmäßig auf der Linie und/oder Fläche angeordnet. Dadurch kann bei möglichst geringem Aufwand eine besonders repräsentative Bedeckung ermittelt werden.

Die vorstehend beschriebene Auswertung erfolgt typischerweise rechnergestützt, unter Nutzung einer die Auswertung vollziehenden Software. Diese kann die Auswertungsergebnisse dann insbesondere auch, ggf. zusammen mit den Rohdaten, z.B. den Oberflächenaufnahmen, dem Werkstück zugeordnet archivieren, gleichermaßen als eine Art Qualitätspass.

Da die Verformung der Oberfläche sowohl von dem Material des Werkstücks, als auch von den Parametern des Partikelstrahlvorgangs, wie insbesondere der geometrischen Form und Größe / Größenverteilung der Partikel, deren Material, wie etwa Glas, Keramik, Stahl oder dergleichen, sowie der Geschwindigkeit des Partikelstrahls, die Impuls und Energie der Partikel beim Auftreffen auf die Oberfläche des Werkstücks bestimmt, abhängt, ergeben sich sehr unterschiedliche und individuelle Treffermuster und -geometrien des gestrahlten Werkstücks. Aufgrund dessen müssen die Werte für den Höhenschwellwert und auch den Steigungsschwellwert jeweils für eine gegebene Kombination aus Werkstück und Strahlparametern bestimmt werden oder aus einer großen Datenbasis näherungsweise abgeleitet werden. Sofern das Verhältnis von Durchmesser zu Tiefe der Einschlagskalotten ähnlich bleibt, lassen sich mit anderen Parametern gewonnene Höhenschwellwerte und auch den Steigungsschwellwerte unproblematisch verwenden. Mit Vorteil kann daher eine Menge von Höhenschwellwerte und den Steigungsschwellwerte für unterschiedliche Verhältnis von Durchmesser zu Tiefe der Einschlagskalotten gewonnen und/oder vorgehalten werden. Insbesondere wird zur Durchführung des erfindungsgemäßen Verfahrens der anzuwendende Höhenschwellwert und der anzuwendende Steigungsschwellwert mit dem ähnlichsten Verhältnis von Durchmesser zu Tiefe der Einschlagskalotten oder eine Interpolation bzw. ein gewichteter Mittelwert der Höhenschwellwerte und der Steigungsschwellwerte mit den ähnlichsten Verhältnissen von Durchmesser zu Tiefe der Einschlagskalotten verwendet.

Zur genaueren Bestimmung können die Werte für den Höhenschwellwert und/oder den Steigungsschwellwert vorzugsweise anhand einer Analyse von einem mit einem bestimmten Partikelstrahl mit vorgegebenen Partikeln und Strahlparametern bearbeiteten Referenzmuster und/oder einem für einen solchen Bearbeitungsvorgang erstellten Simulationsmodell eines Bearbeitungsmusters bestimmt werden und/oder anhand von Analysen einer Vielzahl jeweils mit unterschiedlichen Partikelstrahlen (jeweils mit vorgegebenen Partikeln und Strahlparametern) bearbeiteten Referenzmustern und/oder für solche Bearbeitungsvorgänge erstellten Simulationsmodellen von Bearbeitungsmustern bestimmt werden.

Die Bestimmung der Schwellwerte kann dabei über statistische Verfahren anhand der Höhen- und Steigungsverteilung in Aufnahmen von, idealerweise aber nicht notwendigerweise gering bedeckten, gestrahlten Oberflächen an Referenzwerkstücken erfolgen. Sie kann aber auch aus Erwägungen zu den aufgrund von Einschlägen und induzierten Druckeigenspannungen zu erwartenden Verformungen aus einer Simulation abgeleitet werden.

Die Schwellwerte (Höhenschwellwert und auch den Steigungsschwellwert) lassen sich beispielsweise als Koordinaten in einem zweidimensionalen Parameterraum bestehend aus lokaler Höhe und lokaler Steigung auffassen, der gemessene Bedeckungsgrad $CR_G(Z,Z')$ bildet dabei die Antwortgröße.

Zur Bestimmung konkret anzuwendender Schwellwerte kann für mehrere tatsächliche Bedeckungsgrade (z.B. 60%, 80% und 100%) anhand mehrerer Proben der Mittelwert des gemessenen Bedeckungsgrades $CR_{\hat{G},i}(Z,Z')$ samt Standardabweichung $\sigma_i(Z,Z')$ über den Parameterraum bestimmt werden. Nun werden die Differenzen der Mittelwerte des gemessenen Bedeckungsgrades zwischen jeweils zwei verschieden bedeckten Probengruppen (über den Parameterraum) bestimmt und anschließend mit der Summe der jeweiligen lokalen Standardabweichungen normiert. Es resultiert eine Repräsentation der bei verschiedenen Schwellwertkombinationen erreichbaren Unterscheidungsfähigkeit $Sig(Z,Z')$ über den Parameterraum.

$$Sig(Z,Z') = \frac{CR_{\hat{G},1}(Z,Z') - CR_{\hat{G},2}(Z,Z')}{\sigma_1(Z,Z') + \sigma_2(Z,Z')}$$

Das Ergebnis ist in erreichbarem Abstand der Messwerte in Standardabweichungen angegeben, anhand dessen lassen sich leicht optimale Schwellwertkombinationen auswählen. Der Zusammenhang zwischen gemessenem und realem Bedeckungsgrad kann beispielsweise über eine Korrelationsfunktion oder Look-up-Tabelle hergestellt werden. Alternativ kann über einen separaten, insbesondere vorbestimmten, Schwellwert zwischen Gut- und Schlechtteilen, also solchen mit ausreichender und solchen mit nicht ausreichender Bedeckung, befunden werden.

Wenn beispielsweise die Unterscheidung zwischen 97% und 98% Bedeckungsgrad gewünscht ist, empfiehlt es sich Proben mit entsprechender Bedeckung im Bereich von 97% bis 98% zur Bestimmung der Schwellwerte heranzuziehen. Die vorliegende Erfindung kann allgemein den Gebieten der, insbesondere automatischen, Prüftechnik und der optischen Messtechnik zur Qualitätssicherung zugeordnet werden. Sie nutzt vorzugsweise das optische Messverfahren der Weißlichtinterferometrie zur hochauflösenden flächigen Aufnahme partikelgestrahlter Oberflächen. Durch die bevorzugt eingesetzte Nutzung eines Collaborativen Roboters (Cobots) zur Führung des optischen Messinstruments, wie z.B. eines Weißlichtinterferometers, werden sowohl eine automatische Positionierung und Messung als auch eine manuelle Führung ermöglicht. Die gewonnen Oberflächendaten werden anschließend digital verarbeitet.

Bei dem erfindungsgemäßen Verfahren kann somit beispielsweise mittels eines an einem Collaborativen Roboter (Cobot) geführten Messinstruments eine hochaufgelöste 3D Punktwolke der zu prüfenden Oberfläche erzeugt werden. Hierbei kann, wie erwähnt, vorzugsweise ein Weißlichtinterferometer zum Einsatz kommen. Es sind jedoch prinzipiell auch andere Verfahren zur 3D-Oberflächenmessung geeignet. Zur Erleichterung der Feinpositionierung des Messbereiches auf dem zu prüfenden Bauteil oder Werkstück kann eine Laserzielvorrichtung bestehend aus einem Kreuz- und einem Punktlaser zum Einsatz kommen. Die Laser können an dem Messgerät dabei so positioniert und ausgerichtet werden, dass an einem Tool Center Point des Messgerätes der Mittelpunkt des Kreuzes und der Punkt aufeinanderliegen. So kann ein Bediener das Messgerät besonders einfach handhaben und für die Messung ausrichten.

Für jeden Punkt der angefertigten Aufnahme wird anschließend sein Oberflächenniveau, also seine Höhe, gegenüber der idealisierten Werkstückoberfläche bestimmt, und es wird die lokale Steigung der Oberflächenkontur an dem Punkt gegenüber den benachbarten Punkten bestimmt. Punkte, die zugleich oberhalb eines Höhenschwellwerts sowie unterhalb eines Steigungsschwellwerts liegen, werden erfindungsgemäß als nicht vom Strahlgut getroffener Teil der ursprünglichen Oberfläche identifiziert. Anhand des unbedeckten Oberflächenanteils wird dann nun auf den Bedeckungsgrad geschlossen.

In einem erfindungsgemäßen Verfahren können die Aufnahmen der zu begutachtenden Werkstückoberfläche z.B. mittels eines an einem Cobot, z.B. dem Modell CRX10IAL-30P-V-PN/0 des Anbieters FANUC, montierten Messkopfes eines Weißlichtinterferometers durchgeführt werden. Der Cobot kann dabei z.B. auf einem verfahrbaren Tisch angeordnet sein. Auf dem Tisch kann dabei die nötige Robotersteuerung und kann auch ein Rechner zur Auswertung der Aufnahmen angeordnet sein. Die Oberseite des Tisches kann insbesondere zugleich auch als Ablagefläche für die zu prüfenden Bauteile dienen. An Orten mit verstärkt auftretenden Schwingungen kann es nötig sein, einen solchen Tisch auf Dämpfern zu lagern. An einem Flansch des Roboters kann der Messkopf mit einem Weißlichtinterferometer, z.B. das Modell H6 des Anbieters Heliotis, befestigt sein. Das Interferometer kann wahlweise parallel oder orthogonal zur Drehachse des Flansches ausgerichtet sein. Der Messkopf kann weiterhin einen Kreuz- und einen Punktlaser enthalten, welche eine Zielvorrichtung bilden. Hierzu können die Laser so ausgerichtet werden, dass der Punkt und der Mittelpunkt des Kreuzes im Tool Center Point des Interferometers aufeinanderliegen. Die Positionierung des Messkopfes kann automatisch durch den Roboter oder unter Nutzung der Handführfunktion erfolgen. Wird nun eine Aufnahme ausgelöst werden die Daten in den Rechner übertragen und ausgewertet.

Um Fehler zu vermindern, darf das Interferometer während der Aufnahme eine maximale Verkippung gegenüber der Oberflächennormale des Werkstückes nicht überschreiten. Die maximal zulässige Verkippung hängt sowohl von der genauen Oberflächengeometrie als auch der geforderten Genauigkeit ab.

In einem Preprocessing Schritt können bei Bedarf mehrere Einzelaufnahmen zu einer größeren Fläche zusammengefügt werden. Anschließend können über einen statistischen Ausreißerfilter unplausible Messpunkte und Rauschen entfernt werden. Hier besteht die Möglichkeit, mittels eines abgewandelten Gaußfilters fehlende Punkte durch plausible Werte zu ersetzen. In den so vorbereiteten Punktwolken kann dann die theoretische Oberfläche des Bauteils mittels eines Fitting-Algorithmus bestimmt werden. Alternativ ist es möglich die theoretische Oberfläche aus einem Konstruktionsprojekt für die Fertigung des Bauteils zu entnehmen. Nun können die lokalen Höhen der Punkte entweder durch Berechnung des geometrischen Abstandes zur theoretischen Oberfläche oder durch Subtraktion des Z-Wertes selbiger an gleicher X und Y Koordinate bestimmt werden. Aus den so bestimmten Höhen können nun, z.B. mit einem Sobel-Operator, die lokalen Steigungen berechnet werden. Alle Punkte, die oberhalb des Höhenschwellwerts und gleichzeitig unterhalb des Steigungsschwellwertes liegen, werden als Teil der unbedeckten Oberfläche identifiziert.

Zur Bestimmung der Schwellwerte können z.B. folgende zwei Herangehensweisen zur Anwendung kommen: So können die Schwellwerte werden aus den Höhen- und Steigungshistogrammen einer Testmessung abgelesen werden. Alternativ können die Schwellwerte aus theoretischen Überlegungen zu den zu erwartenden Verformungen der Oberfläche bei dem konkret angewandten Verfahren und dem konkreten Werkstück abgeleitet werden. Bei abgelesenen Schwellwerten empfiehlt es sich die Testmessung auf einer Probe mit geringem Bedeckungsgrad durchzuführen und anschließend die Schwellwerte bei Bedarf so anzupassen, dass bekannte vollständig und unvollständig bedeckte Teststücke korrekt zugeordnet werden. Hierbei ist es wichtig für jede Kombination von Material und Strahlparametern eigene Schwellwerte zu bestimmen.

Mögliche Ausgestaltungen des erfindungsgemäßen Verfahrens sollen im Folgenden rein exemplarisch anhand der nachfolgenden rein schematischen Figuren erläutert werden. Dabei zeigen:

Fig. 1  ein Ablaufdiagramm,

Fig. 2  ein Ablaufdiagramm,

Fig. 3  ein Ablaufdiagramm,

Fig. 4  eine Veranschaulichung der Bestimmung der Höhenabweichung und

Fig. 5  eine Veranschaulichung der Identifizierung von Messpunkten.

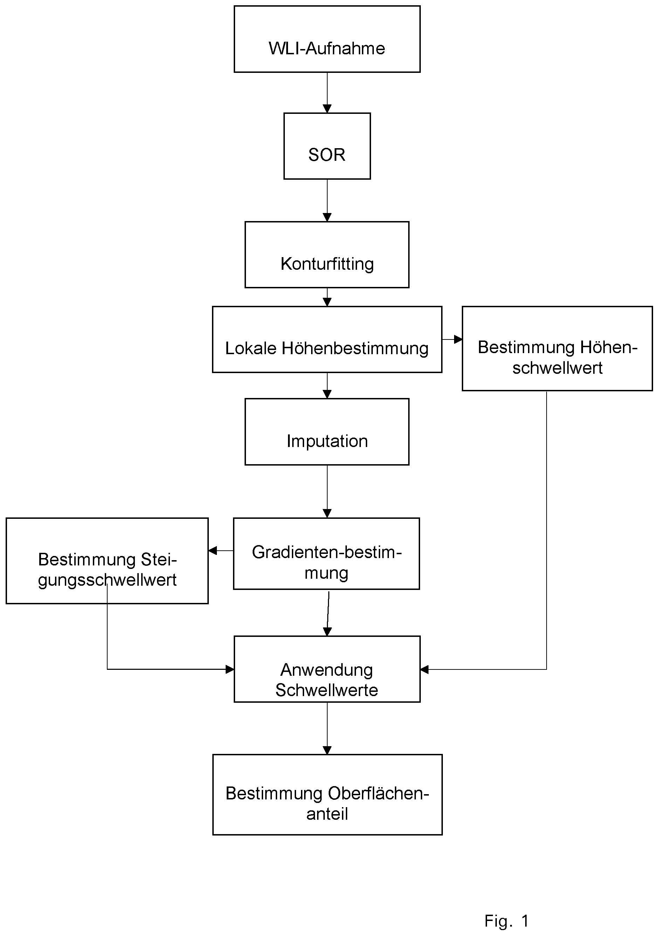

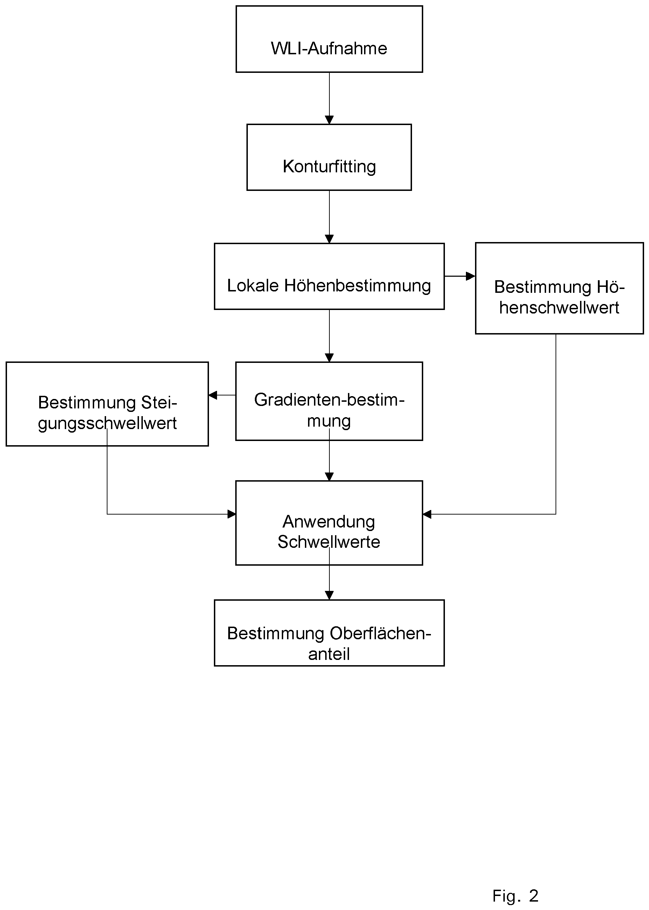

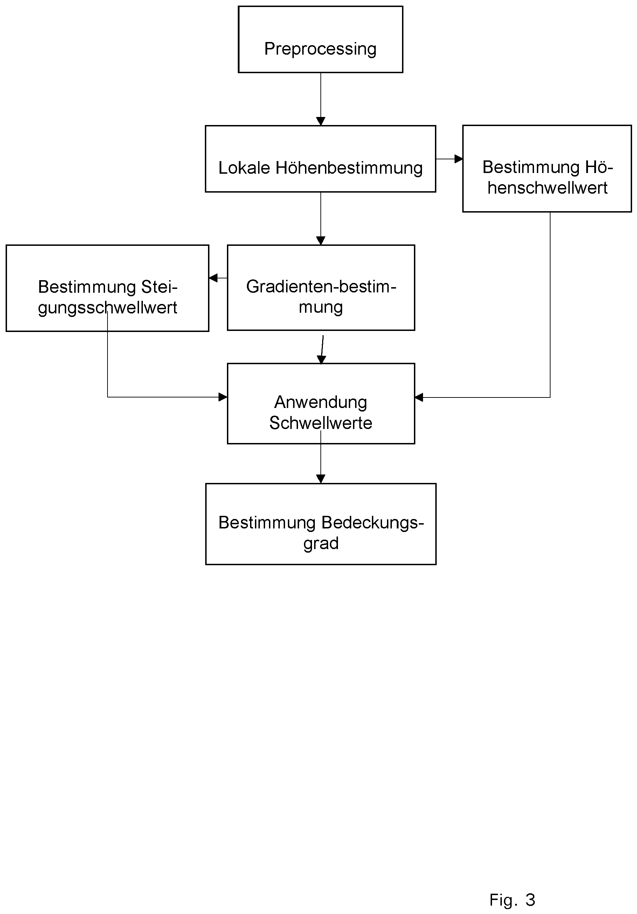

Die Figuren 1 bis 3 zeigen Ablaufdiagramme von exemplarischen Ausgestaltungen. Um den Kern der gezeigten Verfahrensführung, die ausgehend von der lokalen Höhenbestimmung auf Basis des Höhenschwellenwerts und der Gradientenbestimmung und der Bestimmung des Steigungsschwellenwerts den Bedeckungsgrad, also den Oberflächenanteil der ursprünglichen Oberfläche, wie er allgemein in Figur 3 gezeigt ist, zeigen die Figuren 1 und 2 mögliche weitere Details: So beginnt Fig. 3 mit einer Weißlichtinterferometrie, gefolgt von einer Datenaufbereitung mittel SOR (Statistical Outlier Removal), durch das Ausreißer anhand ihres zu großen Abstands zu den Nachbarpunkten entfernt werden.

Sodann folgt das Fitting mit der bekannten Sollkontur (Konturfitting), um die lokalen Höhen zu bestimmen. Für die Gradientenbestimmung wird dann mittel Imputation der Datensatz wieder vervollständigt, indem für die durch SOR beseitigten Messpunkte, beispielsweise durch Interpolation, neue Messwerte bestimmt werden. Fig. 2 zeigt eine einfachere Verfahrensführung ohne SOR und Imputation.

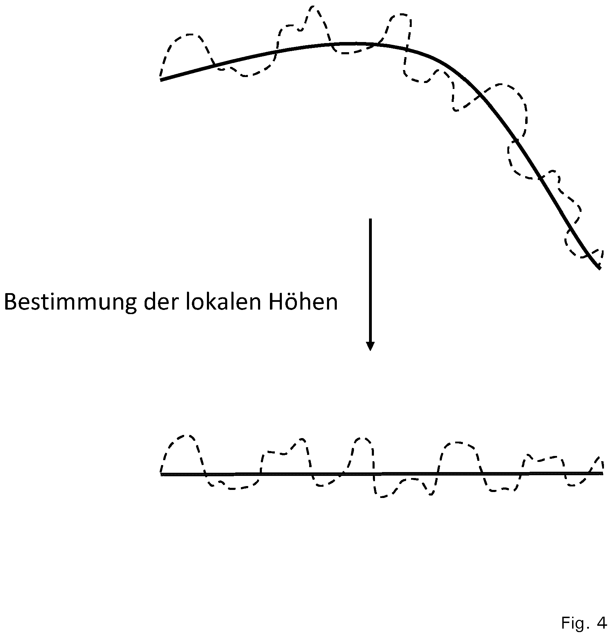

Fig. 4 veranschaulicht schematisch das Konturfitting. Gestrichelt gezeigt ist die gemessene Feinkontur. Mit einer durchgezogenen Linie ist die Grobgeometrie, also beispielsweise die geplante Kontur gezeigt. Die Darstellung beschränkt sich auf einen zweidimensionalen Schnitt. Durch Bestimmung der Abweichung zwischen Fein- und Grobkontur kann die lokale Höhe bestimmt werden (durch Pfeil veranschaulicht), bei der sozusagen, die Grobkontur zu einer Geraden/Ebene gebogen wurde.

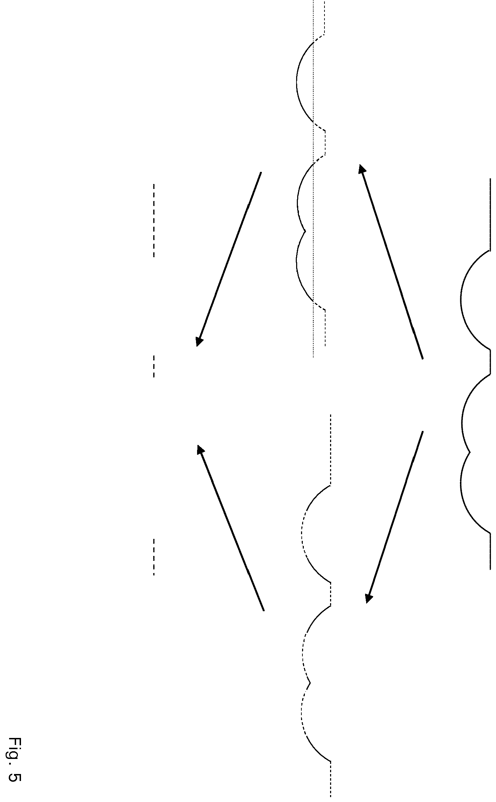

Fig. 5 veranschaulicht die Bestimmung des nicht von dem Partikelstrahl getroffenen Teils. Oben gezeigt ist das Profil der lokalen Höhe über eine zweidimensionale Schnittlinie. Durch den Pfeil nach links angedeutet ist die Bestimmung des Teils der erfassten Oberflächenniveau, der oberhalb eines um einen vorgegebenen Höhenschwellwert niedriger als das Sollniveau liegenden Niveaus, liegt und nach rechts des Teils, der einen Steigungsschwellwert unterschreitet.

Zur Bestimmung des Teils der erfassten Oberflächenniveau, der oberhalb eines um einen vorgegebenen Höhenschwellwert niedriger als das Sollniveau liegenden Niveaus, liegt ist nach links zunächst, punktiert das Niveau eingezeichnet. Gestrichelt ist der Teil dargestellt, der das Niveau überschreitet, durchgezogen, der, der es unterschreitet.

Zur Bestimmung des Teils, der einen Steigungsschwellwert unterschreitet wird die Steigung bestimmt. Der Teil, der den Steigungsschwellwert unterschreitet ist rechts gestrichelt dargestellt.

Unten ist wiederrum der Teil gestrichelt dargestellt, dar auf Basis der beiden vorausgehenden Analysen als nicht von dem Partikelstrahl getroffen gilt.

Dabei ist darauf zu achten, dass die obere und untere Darstellung seitlich unversetzt untereinander angeordnet sind, während die mittleren Darstellungen nach links bzw. rechts versetzt dargestellt sind. Zu erkennen ist, dass beispielsweise die Bereiche des Beginns der Krater, obwohl sie das Niveau noch überschreiten, als behandelt angesehen werden, da hier im Beginn des Kraters eine große Steigung vorliegt. Andererseits werden die Bereiche niedriger Steigung am Boden der Krater ebenfalls als behandelt angesehen, weil sie das Niveau (deutlich) unterschreiten. Dies zeigt, dass durch das Verfahren eine besonders zuverlässige Beurteilung möglich ist.

**Patentansprüche**

1. Verfahren zur Beurteilung des Ergebnisses einer an einem Werkstück mittels Partikelstrahlens durchgeführten Oberflächenbehandlung, wobei

   (1) mittels eines optischen Messverfahrens die mittels Partikelstrahlens bearbeitete Oberfläche ortsaufgelöst aufgenommen und für die ortsaufgelösten Messpunkte jeweils

       a. ein Oberflächenniveau sowie
       b. ein Wert einer lokalen Steigung gegenüber benachbarten Messpunkten ermittelt wird,

   (2) wobei das erfasste Oberflächenniveau mit einem für das unbehandelte Werkstück an dem Messort des Messpunkts erwarteten Sollniveau verglichen und eine Abweichung ermittelt wird, und wobei weiter folgende Schritte ausgeführt werden:

       (3.1) Identifizieren solcher Messpunkt, für die

          a. das gemäß (1) a. erfasste Oberflächenniveau oberhalb eines um einen vorgegebenen Höhenschwellwert niedriger als das Sollniveau liegenden Niveaus liegt und zudem
          b. die gemäß (1) b. erfasste Steigung einen vorgegebenen Steigungsschwellwert unterschreitet, als nicht von einem Partikel des Partikelstrahls getroffene Messpunkte,

       (3.2) Dividieren der Anzahl der unter (3.1) als nicht von einem Partikel des Partikelstrahls getroffen identifizierten Messpunkte durch die Gesamtzahl der erfassten Messpunkte zur Bestimmung eines nicht von dem Partikelstrahl getroffenen Anteils der Oberfläche.

2. Verfahren nach Anspruch 1, **dadurch gekennzeichnet, dass** als optisches Messverfahren eine Weißlichtinterferometrie, Laserlichtschnittsensoren, ein Stereokamerasystem und/oder ein Shape-by-Shading-Verfahren verwendet wird.

3. Verfahren nach einem der Ansprüche 1 oder 2, **dadurch gekennzeichnet, dass** das ortsaufgelöste Aufnehmen der mittels Partikelstrahlens bearbeiteten Oberfläche mittels eines optischen Messverfahrens mithilfe eines an einem Cobot angeordneten optischen Messgerät durchgeführt wird.

4. Verfahren nach einem der vorhergehenden Ansprüche, **dadurch gekennzeichnet, dass** die Werte für den Höhenschwellwert und/oder den Steigungsschwellwert anhand einer Analyse von einem mit einem bestimmten Partikelstrahl mit vorgegebenen Partikeln und Strahlparametern bearbeiteten Referenzmuster und/oder einem für einen solchen Bearbeitungsvorgang erstellten Simulationsmodell eines Bearbeitungsmusters bestimmt werden.

**Claims**

1. A method for assessing the result of a surface treatment carried out on a workpiece by particle jets, wherein

   (1) The surface processed by particle jets is recorded in a spatially resolved manner by means of an optical measuring method and for the spatially resolved measuring points in each case

       a. a surface level and
       b. a value of a local gradient in relation to neighbouring measuring points is determined,

   (2) wherein the detected surface level is compared with a target level expected for the untreated workpiece at the measuring location of the measuring point and a deviation is determined, and wherein the following steps are also carried out:

       (3.1) Identify those measuring points for which

          a. the surface level detected according to (1) a. is above a level that is lower than the target level by a specified height threshold value, and also

b. the gradient detected in accordance with (1) b. falls below a specified gradient threshold,

as measuring points not hit by a particle of the particle beam,

(3.2) Dividing the number of measurement points identified in (3.1) as not hit by a particle of the particle beam by the total number of measurement points detected to determine a portion of the surface not hit by the particle beam.

2. A method according to claim 1, **characterised in that** the optical measuring method used is white light interferometry, laser light section sensors, a stereo chamber system and/or a shape-by-shading method.

3. A method according to one of claims 1 or 2, **characterised in that** the spatially resolved recording of the surface processed by particle jets is carried out by means of an optical measuring method using an optical measuring device arranged on a cobot.

4. A method according to one of the preceding claims, **characterised in that** the values for the height threshold value and/or the gradient threshold value are determined on the basis of an analysis of a reference pattern processed with a specific particle beam with predetermined particles and beam parameters and/or a simulation model of a processing pattern created for such a processing operation.

**Revendications**

1. Procédé d'évaluation du résultat d'un traitement de surface effectué sur une pièce par jets de particules, dans lequel

(1) La surface traitée par jets de particules est enregistrée de manière résolue dans l'espace au moyen d'une procédé de mesure optique et pour les points de mesure résolus dans l'espace dans chaque cas

a. un niveau de surface et
b. la valeur d'un gradient local par rapport aux points de mesure voisins est déterminée,

(2) dans lequel le niveau de surface détecté est comparé à un niveau cible attendu pour la pièce non traitée à l'emplacement du point de mesure et un écart est déterminé, et dans lequel les étapes suivantes sont également exécutées :

(3.1) Identifier les points de mesure pour lesquels

a. le niveau de surface détecté conformément à (1) a. est supérieur à un niveau inférieur au niveau cible d'une valeur seuil de hauteur spécifiée, et également
b. le gradient détecté conformément au point (1) b. est inférieur à un seuil de gradient spécifié,
en tant que points de mesure non touchés par une particule du faisceau de particules,

(3.2) Diviser le nombre de points de mesure identifiés en (3.1) comme n'ayant pas été touchés par une particule du faisceau de particules par le nombre total de points de mesure détectés pour déterminer une partie de la surface non touchée par le faisceau de particules.

2. Procédé selon la revendication 1, **caractérisé par le fait que** le procédé de mesure optique utilisé est l'interférométrie en lumière blanche, les capteurs de section de lumière laser, un système de chambre stéréo et/ou un procédé Shape-by-Shading.

3. Procédé selon l'une des revendications 1 ou 2, **caractérisé par le fait que** l'enregistrement spatialement résolu de la surface traitée par les jets de particules est réalisé au moyen d'un procédé de mesure optique utilisant un dispositif de mesure optique disposé sur un cobot.

4. Procédé selon l'une des revendications précédentes, **caractérisé par le fait que** les valeurs de la valeur seuil de hauteur et/ou de la valeur seuil de gradient sont déterminées sur la base d'une analyse d'un motif de référence traité avec un faisceau de particules spécifique avec des particules et des paramètres de faisceau prédéterminés et/ou un modèle de simulation d'un motif de traitement créé pour une telle opération de traitement.

Fig. 1

Fig. 2

```
┌─────────────────────┐
│    Preprocessing    │
└─────────────────────┘
           │
           ▼
┌─────────────────────┐        ┌─────────────────────┐
│ Lokale Höhenbestimmung │────▶│  Bestimmung Hö-     │
│                     │        │  henschwellwert     │
└─────────────────────┘        └─────────────────────┘
           │                             │
           ▼                             │
┌──────────────────┐  ┌──────────────────┐         │
│ Bestimmung Stei- │◀─│ Gradienten-bestim- │       │
│ gungsschwellwert │  │ mung             │         │
└──────────────────┘  └──────────────────┘         │
        │                      │                   │
        │                      ▼                   │
        │             ┌─────────────────────┐      │
        └────────────▶│    Anwendung        │◀─────┘
                      │    Schwellwerte     │
                      └─────────────────────┘
                               │
                               ▼
                      ┌─────────────────────┐
                      │ Bestimmung Bedeckungs- │
                      │       grad          │
                      └─────────────────────┘
```

Fig. 3

Bestimmung der lokalen Höhen

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3950642 A
- US 5293320 A
- US 5235517 A
- US 5581483 A
- DE 102010001286 A1
- FR 3100336 A1

- JP 2010017807 A
- JP 5511407 B
- JP 2015160282 A
- WO 2018185234 A1
- WO 2019159424 A1
- DE 102020108956 A1